Europäisches Patentamt

European Patent Office

Office européen des brevets

(19)

(11) Numéro de publication: **0166631**
**B1**

(12) **FASCICULE DE BREVET EUROPEEN**

(45) Date de publication du fascicule du brevet:
28.10.87

(51) Int. Cl.⁴: **D 04 B 39/00**, B 29 C 67/14

(21) Numéro de dépôt: **85400937.0**

(22) Date de dépôt: **14.05.85**

(54) **Machine pour la fabrication en continu par tricotage tridimensionnel de profilés en matériau composite.**

(30) Priorité: **15.05.84 FR 8407490**

(43) Date de publication de la demande:
**02.01.86 Bulletin 86/1**

(45) Mention de la délivrance du brevet:
**28.10.87 Bulletin 87/44**

(84) Etats contractants désignés:
**AT BE CH DE GB IT LI NL SE**

(56) Documents cités:
**FR - A - 2 227 748**
**US - A - 2 948 649**
**US - A - 3 327 501**
**US - A - 3 834 424**

(73) Titulaire: **AEROSPATIALE Société Nationale Industrielle, 37, Boulevard de Montmorency, F-75781 Paris Cédex 16 (FR)**

(72) Inventeur: **Banos, Jean, 15 rue du Truc, F-33700 Merignac (FR)**

(74) Mandataire: **Barnay, André François, Cabinet Barnay 80 rue Saint-Lazare, F-75009 Paris (FR)**

ACTORUM AG

## Description

La présente invention est relative à la fabrication des profilés en matériau composite tricoté en trois dimensions en fils ou fibres naturels ou synthétiques, éventuellement imprégnés d'une résine et durcis.

On a décrit dans la demande de brevet de la demanderesse déposée ce même jour (EP-A-165 128) un profilé du type ci-dessus caractérisé en ce qu'il présente en section transversale une forme comportant des angles rentrants et/ou des parties concaves, tricoté en continu sans limitation de longueur, et un procédé pour la fabrication de tels profilés.

L'invention a pour but de fournir une machine pour la fabrication de ces profilés par tricotage de fils ou fibres naturels ou synthétiques tricotés en continu, par la mise en œuvre du procédé défini dans ladite demande de brevet pour: Perfectionnement aux profilés composites tricotés en trois dimensions et procédé pour leur fabrication.

L'invention a pour objet à cet effet une machine automatique pour la fabrication en continu par tricotage tridimensionnel de profilés en matériau composite imprégnés ou non d'une résine, sans limitation de longueur, du type comprenant des tiges délimitant la forme extérieure du profilé désiré et s'étendant dans le sens longitudinal de celui-ci, et au moins deux têtes de tricotage déposant des fils autour desdites tiges dans deux plans orthogonaux entre eux et perpendiculairement è ces tiges, machine caractérisée en ce que lesdites tiges sont des tiges minces creuses, et en ce qu'elle comprend des moyens pour maintenir lesdites tiges creuses de façon fixe parallèlement entre elles suivant une configuration qui correspond à la forme en section droite du profilé désiré, des moyens pour distribuer des fils longitudinaux continus du profilé tendus à travers lesdites tiges creuses, des moyens d'arrêt pour retenir une extrémité desdits fils sortant des tiges, suivant la même configuration, et un ensemble de têtes de tricotage de type connu, disposées de façon à déposer des nappes de fils continus suivant deux directions transversalement à celle desdites tiges au voisinage des extrémités de celles-ci, des moyens pour guider les fils sortant desdites tiges en continu au fur et à mesure de la pose desdites nappes de fils par lesdites têtes de tricotage, des moyens pour tasser et faire avancer le profilé tricoté ainsi obtenu, un poste d'imprégnation du profilé avec une résine, des moyens pour faire durcir ladite résine et des moyens de coupe du profilé disposés sur le trajet de celui-ci.

Suivant une autre caractérstique de l'invention, lesdits moyens maintenant lesdites tiges creuses fixes suivant la configuration désirée qui correspond à la section droite du profilé sont constitués par une matrice amovible percée d'une pluralité de rangées de trous.

Suivant une autre caractéristique de l'invention, lesdits moyens sur lesquels sont fixées les extrémités des fils sortant desdites tiges creuses sont constitués par un bloc percé d'une pluralité de trous suivant une configuration qui correspond à celle des trous percés dans ladite matrice.

La description qui va suivre, en regarde des dessins annexés à titre d'exemples non limitatifs, permettra bien comprendre comment la présente invention peut être mise en pratique.

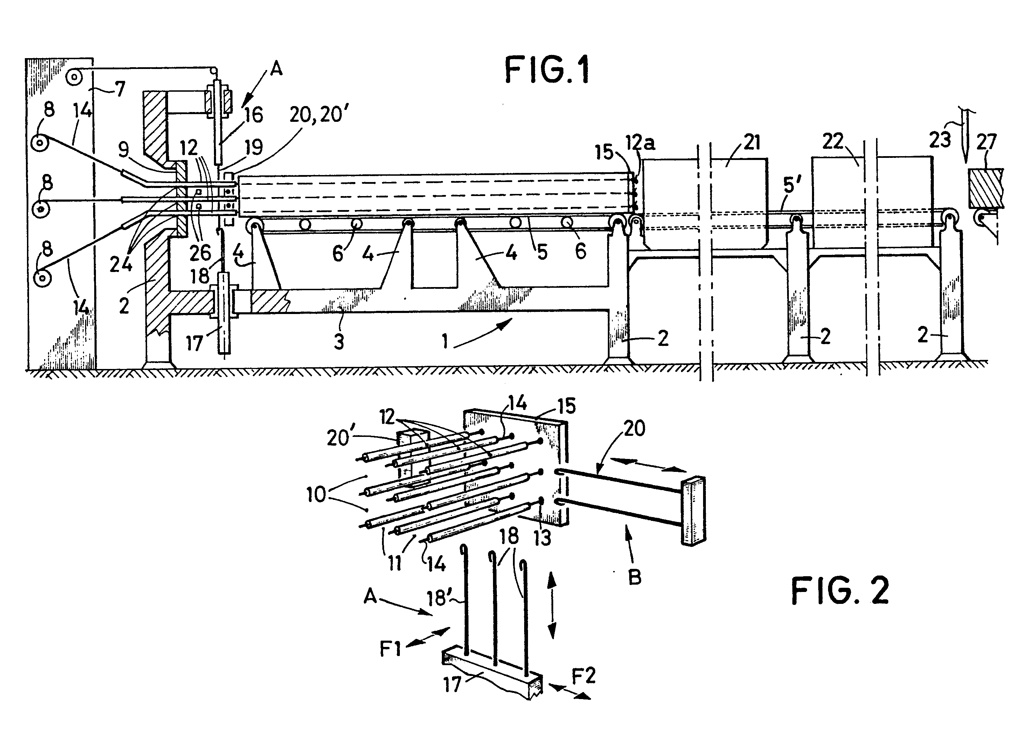

En se référant à la figure 1, la machine comprend un bâti désigné dans son ensemble par la référence 1 comprenant des montants verticaux 2, des longerons 3 et des supports 4 portant des moyens de guidage tels qu'un transporteur continu 5, par exemple à courroie, de type connu dont le brin supérieur est soutenu par des rouleaux 6 (dont une partie seulement est visible au dessin) et des moyens (non représentés) pour entraîner ce transporteur en mouvement.

A l'une de ses extrémités la machine suivant l'invention comporte un banc 7 de distribution sur lequel des bobines 8 de distribution de fils sont montées rotatives.

Entre le banc de distribution 7 et l'une des extrémités du transporteur, un premier montant vertical 2 porte une matrice constituée par une plaque 9 montée amovible sur le montant 2 et percée d'une pluralité de trous 24 disposés par exemple en rangées parallèles.

Des tiges minces creuses 12 sont fixées de façon appropriée par des moyens connus (ou enfoncées à force) dans les trous 24 de la matrice de façon que leurs extrémités opposées au banc de distribution 7 s'étendent parallèlement suivant une configuration analogue à la forme en section du profilé désiré en délimitant entre elles des couloirs 10 et 11 se croisant.

Les extrémités des tiges 12 s'étendent à l'extérieur de la matrice 9 à l'opposé du banc 7 sur une faible longueur de quelques centimètres.

Des fils 14 tendus sous l'effet d'un freinage des bobines 8 s'étendent à travers les tiges creuses 12 et également à travers des trous correspondants d'un bloc de tête 15 qui comporte des rangées parallèles de trous 13 en nombre égal aux trous 24 de la matrice 9 et ayant une configuration identique. Les extrémités des fils 14 sont arrêtées sur la face opposée du bloc de tête 15, par exemple par des noeuds 12a, ou autre moyen approprié.

On a représenté schématiquement à la figure 1 une partie A d'un ensemble de têtes A, B de tricotage d'un type connu (par exemple tel que décrit dans les brevets français de la demanderesse n° 2 227 748 et n° 2 395 340) comprenant une première tête verticale comportant un dispisitif 16 de présentation de fils 19 et un support 17 portant un train d'aiguilles 18, qui est disposé perpendiculairement aux parties parallèles des tiges 12 au voisinage des extrémités de celles-ci adjacentes au bloc de tête 15.

L'ensemble de têtes de tricotage représenté partiellement an A à la figure 1 comprend aussi une seconde tête B (figure 2) ayant un dispositif 20' de présentation de fils et un train d'aiguilles 20 adaptés pour effectuer un mouvement de va-èt-vient perpendiculairement aux tiges 12 et aux fils posés par la première tête et saisir les fils présentés par le dispositif de présentation comme connu en soi.

Ces têtes de tricotage étant connus ne font pas partie de l'invention. On se reportera à ce sujet aux brevets précités de la demanderesse.

On notera toutefois que le train d'aiguilles 20 pourrait avantageusement être remplacé, pour certaines formes de profilés, par un dispositif «distributeur» de fils, par exemple constitué par un tube animé d'un mouvement alternatif dans lequel passe le fil en provenance d'une bobine, le tube circulant dans les couloirs 10 de la matrice 9 en croisant les couloirs 11.

Pour saisir les fils 19 et les tendre dans les couloirs 11, les auguilles 18 sont animées d'un mouvement de va-et-vient, le dispositif de présentation 16 et le support 17 du train d'aiguilles 18 étant adaptés pour pouvoir effectuer les déplacements suivant deux directions orthogonales dans un plan parallèle à celui de la matrice 9.

Le seconde tête de tricotage B identique à la tête de tricotage 16, 17 est disposée de façon à poser des fils dans les rangs 10 perpendiculairement aux fils 19 déposés dans les couloirs 11.

En se référant à la figure 2 on voit que le train d'aiguilles 17 peut être déplacé, par des moyens mécaniques connu, suivant des mouvements de va-et-vient dans trois directions orthogonales comme représenté par des flèches.

Le second train d'aiguilles de la seconde tête de tricotage, désigné par la référence 20, est identique au train d'aiguilles 17 et fonctionne de la même façon mais peut seulement effectuer un mouvement de transmission pour aller chercher les fils à un présentoir (non représenté) situé à l'opposé par rapport aux tiges 12 et les ramener ensuite dans les couloirs 10.

Au fur et à mesure que des fils sont déposés en nappes par les têtes de tricotage 17 et 20, la tête 17 effectue un déplacement dans le sens indiqué par la flèche F1 (figure 2) afin d'exercer une action de tassement des fils déjà posés et revient ensuite dans sa position initiale pour dégager le passage pour le train d'aiguilles 20 posant des fils dans les couloirs 10.

A chaque mouvement de va-et-vient le train d'aiguilles 17 se déplace d'un pas dans le sens de la flèche F2 pour poser des fils dans des couloirs alternés.

On comprend que les fils longitudinaux 14 du profilé sont tirés par le bloc de tête 15 sur le transporteur 5 avec une vitesse qui correspond à celle de la superposition des différentes nappes de fils par les têtes de tricotage, par exemple pas à pas au fur et à mesure du déplacement du train d'aiguilles 17 dans le sens de la flèche F1 pour effectuer un tassement des fils de tricotage du profilé.

On comprend aussi qu'un moyen de tassage indépendant de la tête 17 pourrait effectuer à lui seul le tassage; ce moyen serait constitué par un peigne 26 dont les dents seraient introduites dans le couloir 10, par exemple. Le peigne étant situé entre la matrice 9 et le plan comprenant les auguilles 18, serait alors animé d'un mouvement alternativ dans le sens de la flèche F1.

Par ailleurs, le support 17 peut comporter une ou plusieurs aiguilles 18' de longueur et/ou de course différentes des auguilles 18 de manière à réaliser des dimensions évolutives de différentes parties finies formant la section d'un profilé.

On comprend également que le profilé peut ainsi être tricoté de façon continue en trois dimensions, sa longueur n'étant limitée que par celle des fils emmagasinés sue les bobines 8, ces fils pouvant également être noués à d'autres fils contenus sur des bobines pleines destinées à remplacer les bobines 8 lorsqu'elles sont épuisées.

Porté par le transporteur 5, le profilé formé en arrière du bloc de tête 15 et après enlèvement de ce dernier est amené à travers un poste d'imprégnation 21 représenté schématiquement à la figure 1 dans lequel le profilé tricoté en trois dimensions est entièrement imprégné d'une résine durcissable. A sa sortie du poste d'imprégnation 21 le profilé est entraîné par un autre transporteur 5' à travers un four ou autre étuve approprié 22 afin de provoquer le durcissement de la résine imprégnant le profilé.

Le profilé sortant du poste de durcissage 22 peut être coupé en tronçons 27 de longueur appropriée par exemple au moyen d'un dispositif de coupe représenté schématiquement et désigné par la référence 23, qui peut être constitué par une lame coupante rotative, une scie circulaire ou tout autre moyen approprié. De préférence ces moyens 23 de tronçonnage sont situés à l'extérieur par rapport au rouleau de renvoi d'extrémité du transporteur 5'.

On comprend également que plusieurs dispositifs de coupe tels que 23 peuvent être prévus, l'un d'entre eux pouvant être prévu avant le poste d'imprégnation 21 de manière à effectuer une coupe d'un profilé simplement tricoté. Dans ce cas la machine peut être pourvue de moyens connus (non représentés) pour arrêter les fils et empêcher le profilé de s'effilocher ou de se détricoter.

**Revendications**

1. Machine automatique pour la fabrication en continue par tricotage tridimensionnel de profilés en matériau composite imprégnés ou non d'une résine durcissable, du type comprenant des tiges délimitant la forme extérieure du profilé désiré et s'étendant dans le sens longitudinal de celui-ci, et au moins deux têtes de tricotage déposant des fils autour desdites tiges dans deux plans orthogonaux entre eux perpendiculairement à ces tiges, machines caractérisée en ce que lesdites tiges sont des tiges minces creuses (12), et en ce qu'elle comprend une matrice (9) constrituée par une plaque pour maintenir lesdites tiges creuses de façon fixe parallèlement entre elles suivant une configuration qui correspond à la forme en section droite du profilé désiré, des moyens (7, 8) pour distribuer des fils longitudinaux continus du profilé tendus à travers lesdites tiges creuses (12), des moyens d'arrêt (15) pour retenir une extrémité desdits fils (14) sortant des tiges (12) suivant la même configuration, un ensemble de têtes de tricotage (A et B) de type connu disposées de façon à déposer des nappes de fils condinus suivant deux directions transversalement à celle desdites tiges au voisinage des extrémités de celle-ci, des moyens (5, 5') pour guider les fils sortant desdites tiges en continu au fur et à mesure de la pose desdites nappes de fils par lesdites têtes de tricotage, des moyens pour tasser et faire passer le profilé tricoté ainsi obtenu, un poste (21) d'imprégnation du profilé avec une résine, des moyens (22) pour faire durcir ladite résine imprégnant le profilé, et des moyens de tronçonnage (23), disposés sur le trajet du profilé, en un point quelconque de celui-ci.

2. Machine suivant la revendication 1, caractérisée en ce que lesdits moyens maintenant lesdites tiges creuses fixes (12) suivant la configuration désirée qui correspond à la section droite du profilé sont constitués par une matrice amovible (9) percée d'une pluralité de rangées parallèles de trous (24) suivant deux directions.

3. Machines suivant la revendications 2, caractérisée en ce que lesdits moyens (15) sur lesquels sont fixées les extrémités (12a) des fils sortant desdites tiges creuses (12) sont constitués par un bloc percé d'une pluralité de rangées parallèles de trous suivant une configuration identique à celle des trous percés dans ladite matrice.

4. Machine suivant l'une quelconque des revendications précédentes, caractérisée en ce que ledit ensemble de têtes de tricotage comporte deux têtes disposées suivant deux directions transversales et formées chacune d'un dispositif (16) de présentation de fils et d'un train d'aiguilles (18) en regard du dispositif de présentation de fil.

5. Machine suivant l'une quelconque des revendications précédentes, caractérisée en ce que le dispositif de présentation (16) et les trains d'aiguilles (18) de chacune desdites têtes sont adaptés pour se déplacer, en plus du mouvement de translation propre aux aiguilles, d'une part parallèlement auxdites tiges creuses (12) et d'autre part alternativement, perpendiculairement auxdites tiges, pour changement de couloirs (10, 11) de parte et d'autre de chaque rangée de fils longitudinaux passant dans les tiges (12).

6. Machine suivant l'une quelconque des revendications précédentes, caractérisée en ce que lesdits moyens pour guider et déplacer les fils (14) sortant des tiges (12), pour tasser l'ensemble des fils tricotés et pour faire avancer et passer le profilé tricoté dans le poste d'imprégnation (21) et dans les moyens de durcissement (22) sont constitués par un support (17) portant un train d'aiguilles (18) et par des moyens transporteurs (5, 5').

7. Machine suivant l'une quelconque des revendications précédentes, caractérisée en ce qu'elle comprend des moyens (23) de tronçonnage du profilé à sa sortie des moyens (22) de durcissement.

8. Machine suivant quelconque des revendications précédentes, caractérisée en ce qu'au moins un des trains d'aiguilles (18) est équipé au moins d'une aiguille (18') de longueur différente des aiguilles (18).

9. Machine suivant l'une quelconque des revendications 1 à 8, caractérisée en ce que ledit ensemble de têtes de tricotage comporte au moins deux têtes de tricotage disposées respectivement suivant deux directions et formées, l'une d'un dispositif (16) de présentation de fils (19) et d'un train d'aiguilles (18) en regard du dispositif de présentation de fils, l'autre d'un distributeur de fils (20').

10. Machine suivant la revendication 1, caractérisée en ce que lesdits moyens d'avance et de tassage du profilé sont constitués par un peigne (26) animé d'un mouvement alternatif dans le sens longitudinal du profilé, les dents dudit peigne circulant dans les couloirs parallèles formés par le tiges creuses (12).

**Patentansprüche**

1. Automatische Maschine zur kontinuierlichen Herstellung von Profilen aus Verbundmaterial, welche mit einem härtbaren Harz imprägniert sind oder nicht, durch dreidimensionales Wirken, mit Stangen, welche die äussere Form des gewünschten Profils begrenzen und sich in Längsrichtung desselben erstrecken, und mindestens einem Wirkkopf, welcher Fäden um die Stangen in zwei orthogonalen Ebenen zwischen ihnen senkrecht zu diesen Stangen ablegt, dadurch gekennzeichnet, dass die Stangen dünne Hohlstangen (12) sind, und dass sie eine aus einer Platte bestehende Matrize (9) zum Festhalten der Hohlstangen parallel zueinander nach einer Konfiguration, welche der Form des gewünschten Profils im Querschnitt entspricht, Vorrichtungen (7, 8) zum Verteilen der kontinuierlichen Längsfäden des Profils gestreckt durch die Hohlstangen (12), Haltevorrichtungen (15) zum Halten eines Endes des aus den Stangen (12) gemäss derselben Konfiguration austretenden Fäden (14), einen Satz von Wirkköpfen (A und B) bekannter Art, welche so angeordnet sind, dass sie Vliese kontinuierlicher Fäden nach zwei Richtungen quer zu den der Stangen in der Nähe der Enden derselben ablegen, Vorrichtungen (5, 5') zum kontinuierlichen Führen der aus den Stangen austretenden Fäden je nach der Ablage der Fadenvliese durch die Wirkköpfe, Vorrichtungen zum Pressen und Weiterführen des so erhaltenen Profils, eine Station (21) zum Imprägnieren des Profils mit einem Harz, Vorrichtungen (22) zum Aushärten des das Profil imprägnierenden Harzes, und Vorrichtungen zum Ablängen (23), welche auf dem Weg des Profils in irgendeinem Punkt desselben angeordnet sind, umfasst.

2. Maschine nach Anspruch 1, dadurch gekennzeichnet, dass die Vorrichtung zum Festhalten der Hohlstangen (12) gemäss der gewünschten Konfiguration, welche dem Querschnitt des Profils entsprechen, durch eine mit einer Mehrzahl von parallelen Lochreihen (24) in zwei Richtungen durchbohrte ablösbare Matrize (9) gebildet ist.

3. Maschine nach Anspruch 2, dadurch gekennzeichnet, dass die Vorrichtung (15), an welcher die Enden (12a) der aus den Hohlstangen (12) austretenden Fäden befestigt sind, aus einem mit einer Mehrzahl von parallelen Nadelreihen entsprechend einer zu den in der Matrix gebohrten Löchern identischen Konfiguration durchbohrten Block besteht.

4. Maschine nach einem der vorangehenden Ansprüche, dadurch gekennzeichnet, dass der Satz von Wirkköpfen zwei in zwei Querrichtungen angeordnete Köpfe, deren jeder durch eine Fadenvorschubvorrichtung (16) und eine Reihe von Nadeln (18) gegenüber der Fadenvorschubvorrichtung gebildet ist, umfasst.

5. Maschine nach einem der vorangehenden Ansprüche, dadurch gekennzeichnet, dass die Vorschubvorrichtung (16) und die Nadelreihe (18) jedes der Köpfe geeignet sind, über die Translationsbewegung der Nadeln hinaus sich einerseits parallel zu den Hohlstangen (12) und andererseits abwechselnd senkrecht zu den Stangen verschieben zu können, um die Bahnen (10, 11) beidseitig jeder Reihe von in den Stangen (12) verlaufenden Längsfäden abzuwechseln.

6. Maschine nach einem der vorangehenden Ansprüche, dadurch gekennzeichnet, dass die Vorrichtungen zum Führen und Verschieben der aus den Stangen (12) austretenden Fäden (14), zum Verpressen der Gesamtheit der gewirkten Fäden und zum Vorschub und zur Beförderung des gewirkten Profils zur Imprägnierstation (21) und zur Aushärtvorrichtung (22) aus einem eine Reihe von Nadeln (18) tragenden Träger und Fordervorrichtungen (5, 5') gebildet sind.

7. Maschine nach einem der vorangehenden Anprüche, dadurch gekennzeichnet, dass sie eine Vorrichtung (23) zum Ablängen des Profils bei seinem Austritt aus der Aushärtvorrichtung (22) umfasst.

8. Maschine nach einem der vorangehenden Ansprüche, dadurch gekennzeichnet, dass mindestens eine der Nadelreihen (18) mit mindestens einer Nadel (18') mit von den Nadeln (18) verschiedener Länge versehen ist.

9. Maschine nach einem der Ansprüche 1 bis 8, dadurch gekennzeichnet, dass der Satz von Wirkköpfen mindestens zwei jeweils nach zwei Richtungen angeordnete Wirkköpfe, deren einer von einer Vorschubvorrichtung (16) für die Fäden (19) und einer Reihe von Nadeln (18) gegenüber der Fadenvorschubvorrichtung und deren anderer durch einen Fadenverteiler (20') gebildet ist, umfasst.

10. Maschine nach Anspruch 1, dadurch gekennzeichnet, dass die Vorrichtungen zum Vorschub und zum Verpressen des Profils aus einem zu einer Hin- und Herbewegung in Längsrichtung des Profils angetriebenen Kamm (26) gebildet sind, wobei die Zähne des Kamms in den durch die Hohlstangen (12) gebildeten Bahnen kreisen.

## Claims

1. Automatic machine for the continuous manufacture, by three-dimensional knitting, of sections of reinforced material impregnated or not with a hardenable resin, of the type comprising rods defining the exterior shape of the desired section and extending in the longitudinal direction of the section, and at least two knitting heads to deposit threads around said rods in two mutually orthogonal planes perpendicular to the rods, the machine being characterised in that said rods are thin hollow rods (12), and in that it includes a die (9) constituted by a plate for maintaining said hollow rods fixed parallel to each other in a configuration which corresponds to the correct cross-sectional shape of the desired section, means (7, 8) for feeding continuous longitudinal threads of the section under tension through said hollow rods (12), holding means (15) for anchoring one end of said threads (14) exiting the rods (12) in the same configuration, an assembly of knitting heads (A and B) of known type arranged so as to be able to deposit continuous thread courses in two directions transversely of the direction of said rods adjacent to the ends of the latter, means (5, 5') for guiding the threads leaving said rods continuously in accordance with the pace of deposition of said thread courses by said knitting heads, means for packing down the courses and translating the knitted section thereby obtained, a station (21) at which the section can be impregnated with resin, means (22) for hardening the resin impregnating the section, and cutting means (23) positioned at some point on the path of the section.

2. Machine according to claim 1, characterised in that said means maintaining said hollow rods (12) fixed in accordance with the desired configuration which corresponds to the correct cross-section of the section comprise a removable die (9) pierced by a plurality of rows of parallel holes (24) extending in two directions.

3. Machine according to claim 2, characterised in that said means (15) on which are anchored the ends (12a) of the threads exiting said hollow rods (12) comprise a block pierced by a plurality of rows of parallel holes arranged in a configuration identical to that of the holes in said die.

4. Machine according to any one of the preceding claims, characterised in that said assembly of knitting heads includes two heads positioned to move in two transverse directions and each comprising a device (16) for supplying thread and a series of needles (18) facing the device for supplying thread.

5. Machine according to any one of the preceding claims, characterised in that the thread supply device (16) and the series of needles (18) of each said head are arranged to be displaceable, in addition to translation movement specific to the needles, both parallel to said hollow rods (12) and also, alternately, perpendicular to said rods, in order to change from one to the other of the passages (10, 11) formed by each row of longitudinal threads passing through the rods (12).

6. Machine according to any one of the preceding claims, characterised in that said means for guiding and displacing the threads (17) leaving the rods (12), for packing down the collection of knitted thread and for advancing and translating the knitted section into the impregnation station (21) and into the means (22) for hardening the resin, are constituted by a support (17) carrying a series of needles (18) and by conveyor means (5, 5').

7. Machine according to any one of the preceding claims, characterised in that it includes means (23) for cutting the section at the exit from the means (22) for hardening the resin.

8. Machine according to any one of the preceding claims, characterised in that at least one of the rows of needles (18) is equipped with at least one needle (18') of a length different from that of the other needles (18).

9. Machine according to any one of claims 1 to 8, characterised in that said assembly of knitting heads comprises at least two knitting heads positioned in two respectively different directions, one head comprising a device (16) for supplying thread (19) and a row of needles (18) facing said device for supplying thread, and the other head comprising a thread distribution device (20').

10. Machine according to claim 1, characterised in that said means for advancing and packing down the section comprise a comb (26) movable in a reciprocating manner in the longitudinal direction of the section, the teeth of said comb travelling in the parallel passages formed between the hollow rods (12).

FIG.1

FIG.2